# EUROPÄISCHE PATENTANMELDUNG

(11) **EP 4 198 782 A1**
(43) Veröffentlichungstag der Anmeldung: **21.06.2023**
(21) Anmeldenummer: 21215721.8
(22) Anmeldetag: 17.12.2021
(51) Int. Cl.: G06F 21/60, G05B 13/02, G06N 3/02, H04L 9/00

(54) **VERFAHREN ZUM VERWENDUNGSSCHUTZ VON MASCHINENLERNMODULEN SOWIE SCHUTZSYSTEM**

(71) Anmelder: Siemens Aktiengesellschaft, 80333 München (DE)
(72) Erfinder: Scharinger, Boris, 90762 Fürth (DE); Tokic, Michel, 88069 Tettnang (DE); von Beuningen, Anja, 99085 Erfurt (DE)
(74) Vertreter: Siemens Patent Attorneys

(57) **Zusammenfassung**

Erfindungsgemäß wird zum Verwendungsschutz eines Maschinenlernmoduls (NN) eine Transformationsfunktion (F) zum Ausführen einer von einem Transformationsparameter (K) abhängigen Signaltransformation bereitgestellt. Weiterhin wird eine für eine Verwendung des Maschinenlernmoduls (NN) durch eine Maschinensteuerung (CTL) spezifische Schlüsselangabe (K) eingelesen. Damit werden Eingabesignale (TBS) zum Training des Maschinenlernmoduls (NN) durch die Transformationsfunktion (F) zu transformierten Eingabesignalen (TBST) transformiert, wobei die Schlüsselangabe (K) als Transformationsparameter verwendet wird. Anhand der transformierten Eingabesignale (TBST) wird das Maschinenlernmodul (NN) trainiert. Das trainierte Maschinenlernmodul (NN) wird dann zur Maschinensteuerung (CTL) übermittelt. Durch die Maschinensteuerung (NN) werden Betriebssignale (BS) der Maschine (M) durch die Transformationsfunktion (F) zu transformierten Betriebssignalen (BST) transformiert, wobei die Schlüsselangabe (K) als Transformationsparameter verwendet wird. Die transformierten Betriebssignale (BST) werden dem trainierten Maschinenlernmodul (NN) zugeführt, und die Maschine (M) wird anhand von aus den transformierten Betriebssignalen (BST) abgeleiteten Steuersignalen gesteuert.

## Beschreibung

Komplexe Maschinen, wie z.B. Roboter, Motoren, Fertigungsanlagen, Werkzeugmaschinen, Gasturbinen, Windturbinen oder Kraftfahrzeuge benötigen für einen produktiven und stabilen Betrieb in der Regel komplexe Steuerungs- und Überwachungsverfahren. Zu diesem Zweck werden in zeitgemäßen Maschinensteuerungen häufig Techniken des maschinellen Lernens eingesetzt. So kann z.B. ein neuronales Netz als Steuermodell darauf trainiert werden, eine Maschine in optimierter Weise zu steuern.

Ein Training von neuronalen Netzen oder anderen Maschinenlernmodulen zum Steuern von komplexen Maschinen erweist sich indessen häufig als sehr aufwendig. So werden in der Regel große Mengen von Trainingsdaten, erhebliche Rechenressourcen sowie viel spezifisches Expertenwissen benötigt. Mithin besteht ein großes Interesse daran, trainierte Maschinenlernmodule gegen eine unkontrollierte oder unberechtigte Verbreitung oder Verwendung zu schützen, Diebstähle zu erkennen und/oder sicherzustellen, dass eine zu steuernde Maschine nur mittels autorisierter Maschinenlernmodule gesteuert wird.

Es ist bekannt, zur Kennzeichnung von neuronalen Netzen deren neuronale Gewichte mit einem eindeutigen digitalen Wasserzeichen zu versehen, bevor sie in Verkehr gebracht werden. Anhand des Wasserzeichens kann dann ein vorliegendes neuronales Netz daraufhin geprüft werden, ob es vom Verwender des Wasserzeichens stammt. Das vorstehende Verfahren setzt allerdings einen Zugriff auf die neuronalen Gewichte des neuronalen Netzes voraus. Darüber hinaus sind häufig zusätzliche Maßnahmen erforderlich, durch die eine unberechtigte Verwendung des neuronalen Netzes oder eine Veränderung des Wasserzeichens durch Unberechtigte verhindert oder zumindest erschwert wird.

Es ist Aufgabe der vorliegenden Erfindung, ein Verfahren zum Verwendungsschutz eines Maschinenlernmoduls sowie ein entsprechendes Schutzsystem anzugeben, die einen besseren Verwendungsschutz bieten.

Gelöst wird diese Aufgabe durch ein Verfahren mit den Merkmalen des Patentanspruchs 1, durch ein Schutzsystem mit den Merkmalen des Patentanspruchs 10, durch ein Computerprogrammprodukt mit den Merkmalen des Patentanspruchs 11 sowie durch ein computerlesbares Speichermedium mit den Merkmalen des Patentanspruches 12.

Erfindungsgemäß wird zum Verwendungsschutz eines Maschinenlernmoduls, mittels dessen aus Betriebssignalen einer Maschine Steuersignale zum Steuern der Maschine abzuleiten sind, eine Transformationsfunktion zum Ausführen einer von einem Transformationsparameter abhängigen Signaltransformation bereitgestellt. Weiterhin wird eine für eine Verwendung des Maschinenlernmoduls durch eine Maschinensteuerung spezifische Schlüsselangabe eingelesen. Damit werden Eingabesignale zum Training des Maschinenlernmoduls durch die Transformationsfunktion zu transformierten Eingabesignalen transformiert, wobei die Schlüsselangabe als Transformationsparameter verwendet wird. Anhand der transformierten Eingabesignale wird das Maschinenlernmodul trainiert. Das trainierte Maschinenlernmodul wird dann zur Maschinensteuerung übermittelt. Durch die Maschinensteuerung werden Betriebssignale der Maschine durch die Transformationsfunktion zu transformierten Betriebssignalen transformiert, wobei die Schlüsselangabe als Transformationsparameter verwendet wird. Die transformierten Betriebssignale werden dem trainierten Maschinenlernmodul zugeführt, und die Maschine wird anhand von aus den transformierten Betriebssignalen abgeleiteten Steuersignalen gesteuert.

Zur Durchführung des erfindungsgemäßen Verfahrens sind ein Schutzsystem, ein Computerprogrammprodukt sowie ein computerlesbares, vorzugsweise nichtflüchtiges Speichermedium vorgesehen.

Das erfindungsgemäße Verfahren sowie das erfindungsgemäße Schutzsystem können beispielsweise mittels eines oder mehrerer Computer, Prozessoren, anwendungsspezifischer integrierter Schaltungen (ASIC), digitaler Signalprozessoren (DSP) und/oder sogenannter "Field Programmable Gate Arrays" (FPGA) ausgeführt bzw. implementiert werden. Darüber hinaus kann das erfindungsgemäße Verfahren zumindest teilweise in einer Cloud und/oder in einer Edge-Computing-Umgebung ausgeführt werden.

Ein Vorteil der Erfindung ist insbesondere darin zu sehen, dass ein zu schützendes Maschinenlernmodul auf einfache Weise an eine Verwendung gekoppelt werden kann. Insbesondere kann das Maschinenlernmodul verwendungsspezifisch trainiert bzw. ausgeführt werden. Damit kann in vielen Fällen sichergestellt werden, dass eine Maschine nur mittels eines autorisierten Maschinenlernmoduls gesteuert und/oder ein Maschinenlernmodul nur von berechtigten Anwendern verwendet wird. Darüber hinaus ist die Erfindung flexibel anwendbar und insbesondere nicht auf künstliche neuronale Netze beschränkt.

Vorteilhafte Ausführungsformen und Weiterbildungen der Erfindung sind in den abhängigen Ansprüchen angegeben.

Nach einer besonders vorteilhaften Ausführungsform der Erfindung kann die Transformationsfunktion eine homomorphe und/oder holomorphe Signaltransformation ausführen. Insbesondere kann die Transformationsfunktion selbst eine homomorphe und/oder holomorphe, vorzugsweise injektive Funktion sein. Durch eine homomorphe Funktion werden bekanntlich mathematische, numerische und/oder logische Verknüpfungen von Daten auf entsprechende Verknüpfungen der transformierten Daten abgebildet. Im Fall einer einfachen Verknüpfung gilt insbesondere f(x*y) = f(x)*f(y), wobei das "*"-Verknüpfungszeichen auf der linken Seite der Gleichung eine Verknüpfung der zu transformierenden Daten und auf der rechten Seite eine Verknüpfung der transformierten Daten bezeichnet. Verknüpfungsstrukturen bleiben bei homomorphen Transformationen also erhalten. Auch holomorphe, d.h. komplex differenzierbare Transformationen erhalten wesentliche Strukturen der zu transformierenden Daten, z.B. bei konformen Abbildungen. Aufgrund der strukturerhaltenden Eigenschaften homomorpher und/oder holomorpher Transformationen bleiben viele Muster in Betriebssignalen auch nach der Transformation einer Erkennung und Verarbeitung durch Maschinenlernmodule zugänglich.

Gemäß einer vorteilhaften Ausführungsform der Erfindung kann die Schlüsselangabe eine für die Maschinensteuerung, für eine Steuerplattform der Maschinensteuerung und/oder für einen Anwender der Maschinensteuerung spezifische Angabe sein. Auf diese Weise kann die Transformationsfunktion und damit das Training des Maschinenlernmoduls spezifisch für die Maschinensteuerung, für die Steuerplattform und/oder für den Anwender individualisiert werden.

Insbesondere kann die Schlüsselangabe einen digitalen Fingerabdruck, eine MAC-Adresse (MAC: Media Access Control), ein Benutzerkennwort, eine Hardwarekennung, eine Seriennummer, ein Maschinenzertifikat, eine Parametrisierung und/oder eine Systemeigenschaft der Maschinensteuerung umfassen oder mittels eines Schlüsselgenerators daraus abgeleitet werden.

Vorzugsweise kann dem Schlüsselgenerator ein Betriebssignal der Maschine zugeführt werden. Die Schlüsselangabe kann dann durch den Schlüsselgenerator abhängig vom zugeführten Betriebssignal generiert werden. Insbesondere können dem Schlüsselgenerator ein oder mehrere einem aktuellen Betriebssignal zeitlich vorangegangene Betriebssignale zur Beeinflussung der Generierung der Schlüsselangabe zugeführt werden. Auf diese Weise kann die Schlüsselangabe kontextabhängig generiert werden, wodurch sie durch Unberechtigte wesentlich schwerer zu erschließen ist. Im Übrigen erweist sich, dass ein Training des Maschinenlernmoduls durch eine betriebssignalabhängige Schlüsselgenerierung in vielen Fällen nicht wesentlich beeinträchtigt wird.

Nach einer vorteilhaften Weiterbildung der Erfindung kann ein Trainingserfolg des Maschinenlernmoduls vorzugsweise fortlaufend ermittelt werden. Der Schlüsselgenerator kann dann mittels eines Verfahrens des maschinellen Lernens darauf trainiert werden, eine Schlüsselangabe zu generieren, durch die der Trainingserfolg des Maschinenlernmoduls optimiert wird. Ein jeweiliger Trainingserfolg kann beispielsweise dadurch ermittelt werden, dass eine Performanz der mittels Ausgabesignalen des Maschinenlernmoduls gesteuerten Maschine gemessen oder simulativ ermittelt wird. Die gemessene oder simulativ ermittelte Performanz kann dann in einer Kostenfunktion zum Training des Schlüsselgenerators berücksichtigt werden. Vorzugsweise können das Maschinenlernmodul und der Schlüsselgenerator gemeinsam trainiert werden.

Nach einer weiteren vorteilhaften Ausführungsform der Erfindung können ein vorzugsweise vorgegebenes Test-Eingabesignal sowie ein vorgegebenes digitales Wasserzeichen eingelesen werden. Das Test-Eingabesignal kann durch die Transformationsfunktion zu einem transformierten Test-Eingabesignal transformiert werden. Das Maschinenlernmodul kann dann darauf trainiert werden, anhand des transformierten Test-Eingabesignals das digitale Wasserzeichen zu reproduzieren. Weiterhin kann durch die Maschinensteuerung das transformierte Test-Eingabesignal dem Maschinenlernmodul zugeführt werden. Entsprechend kann geprüft werden, ob ein resultierendes Ausgabesignal des Maschinenlernmoduls das digitale Wasserzeichen enthält. Abhängig vom Prüfungsergebnis kann dann die Maschine gesteuert werden. Insbesondere kann bei einem negativen Prüfungsergebnis ein Alarmsignal an einen Ersteller oder Anwender des Maschinenlernmoduls übermittelt werden. Vorzugsweise kann die Prüfung des digitalen Wasserzeichens in einem von der Maschinensteuerung separierten Hardwaremodul vorgenommen werden.

Gemäß einer weiteren vorteilhaften Ausführungsform der Erfindung kann das Maschinenlernmodul und die Transformationsfunktion in einem Softwarecontainer, insbesondre in einem schlüssel- oder signaturgeschützten Softwarecontainer gekapselt werden. Der Softwarecontainer kann vorzugsweise so ausgestaltet sein, dass das Maschinenlernmodul oder die Transformationsfunktion bei einer Auftrennung des Softwarecontainers ihre Funktion verlieren.

Nach einer weiteren vorteilhaften Ausführungsform der Erfindung kann ein Betriebsverhalten der Maschine überwacht werden, und bei Detektion einer Veränderung des Betriebsverhaltens kann ein Alarmsignal insbesondere an einen Ersteller oder Anwender des Maschinenlernmoduls ausgegeben werden. Eine Verwendung des Maschinenlernmoduls ohne die Transformationsfunktion, mit einer falschen Transformationsfunktion oder mit einer falschen Schlüsselangabe führt in der Regel dazu, dass dem Maschinenlernmodul Eingabesignale zugeführt werden, auf deren Verarbeitung das Maschinenlernmodul nicht trainiert ist. Mithin würde eine Steuerung der Maschine anhand der resultierenden Ausgabesignale in aller Regel ein Fehlverhalten der Maschine nach sich ziehen. Durch die vorstehende Ausführungsform können derartige Fehlsteuerungen in vielen Fällen vermieden werden. Darüber hinaus kann ein Ersteller oder Anwender des Maschinenlernmoduls über die Verwendung eines nicht autorisierten Maschinenlernmoduls informiert werden.

Ein Ausführungsbeispiel der Erfindung wird nachfolgend anhand der Zeichnung näher erläutert. Dabei veranschaulichen jeweils in schematischer Darstellung
- Figur 1: eine Steuerung einer Maschine mittels eines Maschinenlernmoduls,
- Figur 2: einen Betrieb eines erfindungsgemäß geschützten Maschinelernmoduls und
- Figur 3: ein erfindungsgemäßes Schutzsystem für ein Maschinenlernmodul.

Insofern in den Figuren gleiche oder korrespondierende Bezugszeichen verwendet werden, bezeichnen diese Bezugszeichen die gleichen oder korrespondierende Entitäten, die insbesondere wie im Zusammenhang mit der betreffenden Figur beschrieben, implementiert oder ausgestaltet sein können.

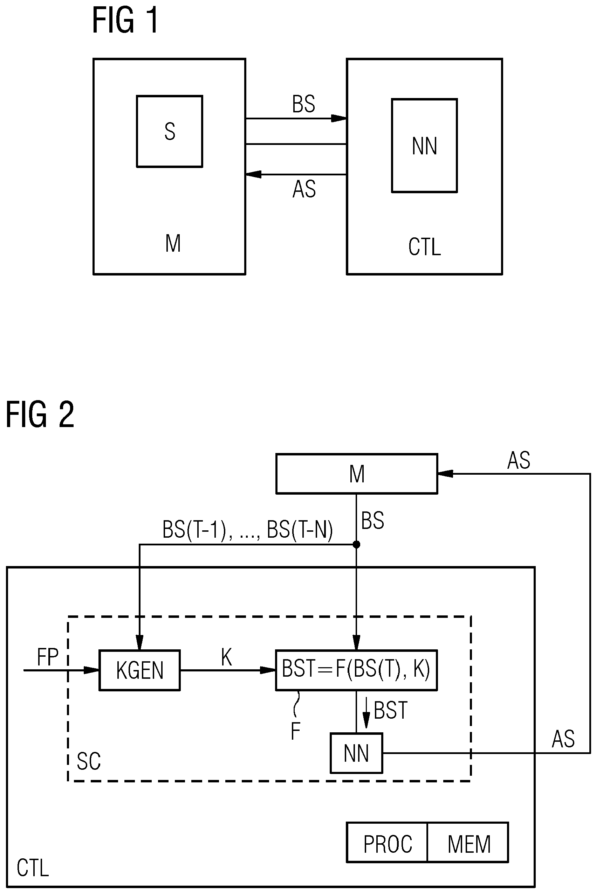

Figur 1 veranschaulicht eine Steuerung einer Maschine M mittels eines trainierten Maschinenlernmoduls NN in schematischer Darstellung. Die Maschine M kann hierbei insbesondere ein Roboter, ein Motor, eine Fertigungsanlage, eine Werkzeugmaschine, eine Turbine, eine Verbrennungskraftmaschine und/oder ein Kraftfahrzeug sein oder eine solche Maschine umfassen. Für das vorliegende Ausführungsbeispiel sei angenommen, dass die Maschine M ein Fertigungsroboter ist.

Die Maschine M wird durch eine an diese gekoppelte Maschinensteuerung CTL gesteuert. Letztere ist in Figur 1 extern zur Maschine M dargestellt. Alternativ dazu kann die Maschinensteuerung CTL auch ganz oder teilweise in die Maschine M integriert sein.

Die Maschine M weist eine Sensorik S auf, durch die fortlaufend Betriebsparameter der Maschine M sowie andere Messwerte gemessen werden. Die von der Sensorik S ermittelten Messwerte werden zusammen mit anderen Betriebsdaten der Maschine M in Form von Betriebssignalen BS von der Maschine M zur Maschinensteuerung CTL übermittelt.

Die Betriebssignale BS umfassen insbesondere Sensordaten und/oder Messwerte der Sensorik S, Steuersignale der Maschine M und/oder Zustandssignale der Maschine M. Die Zustandssignale spezifizieren hierbei jeweils einen Betriebszustand der Maschine M oder von einer oder mehreren ihrer Komponenten, vorzugsweise im Zeitverlauf.

Insbesondere können durch die Betriebssignale BS eine Leistung, eine Drehzahl, ein Drehmoment, eine Bewegungsgeschwindigkeit, eine ausgeübte oder einwirkende Kraft, eine Temperatur, ein Druck, ein aktueller Ressourcenverbrauch, vorhandene Ressourcen, ein Schadstoffausstoß, Vibrationen, ein Verschleiß und/oder eine Belastung der Maschine M oder von Komponenten der Maschine M quantifiziert werden. Vorzugsweise werden die Betriebssignale BS jeweils durch einen oder mehrere numerische Datenvektoren dargestellt und in dieser Form zur Maschinensteuerung CTL übermittelt.

Die Maschinensteuerung CTL verfügt weiter über ein trainiertes Maschinenlernmodul NN zum Steuern der Maschine M. Das Maschinenlernmodul NN ist darauf trainiert, anhand eines eingespeisten Eingabesignals ein Ausgabesignal auszugeben, mittels dessen die Maschine M in optimierter Weise gesteuert werden kann. Zum Training eines solchen Maschinenlernmoduls NN steht eine Vielzahl effizienter Verfahren des maschinellen Lernens zur Verfügung, insbesondere Verfahren des bestärkenden Lernens, das häufig auch als Reinforcement-Learning bezeichnet wird. Auf das Training des Maschinenlernmoduls NN wird unten noch näher eingegangen. Das Maschinenlernmodul NN kann insbesondere als künstliches neuronales Netz implementiert werden.

Zum Steuern der Maschine M werden aus den Betriebssignalen BS mittels des trainierten Maschinenlernmoduls NN Ausgabesignale AS, z.B. in Form von numerischen Datenvektoren abgeleitet. Die Ausgabesignale AS oder daraus abgeleitete Signale werden dann als Steuersignale zur Maschine M übermittelt, um diese in optimierter Weise zu steuern.

Figur 2 veranschaulicht einen Betrieb eines erfindungsgemäß geschützten Maschinenlernmoduls NN zum Steuern der Maschine M. Wie oben bereits erwähnt, wird die Maschine M durch die Maschinensteuerung CTL gesteuert.

Die Maschinensteuerung CTL verfügt zum Schutz des Maschinenlernmoduls NN über eine an eine Eingabeschicht des Maschinenlernmoduls NN gekoppelte Transformationsfunktion F sowie über einen Schlüsselgenerator KGEN. Darüber hinaus weist die Maschinensteuerung CTL einen oder mehrere Prozessoren PROC zum Ausführen von erfindungsgemäßen Verfahrensschritten sowie einen oder mehrere Speicher MEM zum Speichern von zu verarbeitenden Daten auf.

Die Transformationsfunktion F führt im vorliegenden Ausführungsbeispiel eine signalverändernde homomorphe Signaltransformation aus. Vorzugsweise ist die Transformationsfunktion F selbst eine homomorphe Funktion. Alternativ oder zusätzlich kann die Transformationsfunktion F eine signalverändernde holomorphe, d.h. eine komplex differenzierbare Funktion umfassen oder selbst eine holomorphe Funktion sein. Vorzugsweise ist die auszuführende Signaltransformation injektiv.

Zur Implementierung derartiger Transformationsfunktionen sind eine Vielzahl homomorpher bzw. holomorpher Funktionen bekannt. Insbesondere kann eine lineare Funktion F = m*x + b = F(x,(m,b)) einer Variable x mit den Parametern m und b (m ungleich 0) verwendet werden. Alternativ oder zusätzlich kann die Signaltransformation eine homogene Transformation sein oder umfassen, bei der Punkte in einem z.B. 3-dimensionalen Vektorraum durch Translation, Rotation und/oder Skalierung strukturerhaltend transformiert werden. Insbesondere kann eine aus dem Fachgebiet der Robotik bekannte Denavit-Hartenberg-Transformation verwendet werden.

Erfindungsgemäß hängt die von der Transformationsfunktion F ausgeführte homomorphe und/oder holomorphe Signaltransformation von einem Transformationsparameter K ab, der der Transformationsfunktion F vorzugsweise als zusätzliches Argument übergeben wird. In dem obigen Beispiel einer linearen Funktion umfasst der Transformationsparameter das Parameterpaar (m,b).

Wie oben schon erwähnt, werden durch die Maschinensteuerung CTL mit Hilfe des trainierten Maschinenlernmoduls NN aus Betriebssignalen BS der Maschine M Steuersignale zum optimierten Steuern der Maschine M abgeleitet. Als Steuersignale werden Ausgabesignale AS des trainierten Maschinenlernmoduls NN oder daraus abgeleitete Signale verwendet. Für das vorliegende Ausführungsbeispiel sei aus Übersichtlichkeitsgründen angenommen, dass die Maschine M durch die Ausgabesignale AS gesteuert wird.

Die Transformationsfunktion F dient dem Zweck, die Betriebssignale BS in einer für Unberechtigte nicht oder nur schwer nachvollziehbaren Weise zu transformierten Betriebssignalen BST zu transformieren. Aufgrund der Homomorphie bzw. Holomorphie der Transformationsfunktion F bleiben in den transformierten Betriebssignalen BST viele Verknüpfungsmuster und Korrelationen der von der Maschine M stammenden Betriebssignale BS erhalten. Mithin können diese Muster und Korrelation durch das Maschinenlernmodul NN erlernt und auf diesbezüglich optimierte Steuersignale, hier AS, abgebildet werden.

Zur Individualisierung der durch die Transformationsfunktion F vorgenommenen Signaltransformation wird diese durch den Transformationsparameter K beeinflusst. Im vorliegenden Ausführungsbeispiel wird der Transformationsparameter K zusammen mit einem jeweiligen Betriebssignal BS als zusätzliches Argument der Transformationsfunktion F übergeben. Ein jeweiliges transformiertes Betriebssignal BST ergibt sich damit in Abhängigkeit des Transformationsparameters K gemäß BST = F(BS, K) als Rückgabewert der Transformationsfunktion F.

Um die Signaltransformation spezifisch für die Verwendung des Maschinenlernmoduls NN durch die Maschinensteuerung CTL zu individualisieren, wird als Transformationsparameter K im vorliegenden Ausführungsbeispiel eine für die Maschinensteuerung CTL und/oder deren Benutzer spezifische Schlüsselangabe verwendet. Diese wird durch einen Schlüsselgenerator KGEN unter anderem aus einen digitalen Fingerabdruck FP der Maschinensteuerung CTL abgeleitet. Der digitale Fingerabdruck FP umfasst dabei Daten, die vorzugsweise einzigartig für die Maschinensteuerung CTL, deren Benutzer und/oder für die Maschine M sind, beispielsweise eine MAC-Adresse, eine Hardwarekennung, eine Seriennummer, ein Maschinenzertifikat, Konfigurationsparameter, ein Benutzerkennwort etc.

Zum Steuern der Maschine M werden deren auf einen aktuellen Zeitpunkt T bezogene Betriebssignale BS(T) durch die Maschinensteuerung CTL erfasst und der Transformationsfunktion F jeweils als Argument übergeben. Weiterhin werden frühere Betriebssignale BS(T-1), BS(T-2), ..., BS(T-N) zusammen mit dem digitalen Fingerabdruck FP in den Schlüsselgenerator KGEN eingespeist, wobei N eine Anzahl von bei der Schlüsselgenerierung zu berücksichtigenden Betriebssignalen bezeichnet. Für N kann insbesondere ein Wert von 0, 1, 2 oder 5 gewählt werden.

Aus dem digitalen Fingerabdruck FP und dem früheren Betriebssignalen BS(T-1), BS(T-2), ..., BS(T-N) der Maschine M generiert der Schlüsselgenerator KGEN die für die Maschinensteuerung CTL und/oder deren Benutzer spezifische Schlüsselangabe K und übergibt diese als zusätzliches Argument an die Transformationsfunktion F. Die Schlüsselgenerierung kann hierbei insbesondere eine logische Verknüpfung, eine numerische Verknüpfung, eine Bitverknüpfung, eine Hashwertbildung und/oder sog. Einwegfunktionen verwenden. Die zusätzliche Beeinflussung der Schlüsselgenerierung durch die früheren Betriebssignale BS(T-1), BS(T-2), ..., BS(T-N) erschwert es Unberechtigten, die Schlüsselangabe K zu erschließen. Es erweist sich im Übrigen, dass ein Training des Maschinenlernmoduls NN in vielen Fällen durch diese Beeinflussung nicht wesentlich beeinträchtigt wird.

Die Transformationsfunktion F transformiert ein jeweiliges aktuelles Betriebssignal BS(T) abhängig von der Schlüsselangabe K zu einem jeweils aktuellen transformierten Betriebssignal BST = F(BS(T), K). Das jeweilige transformierte Betriebssignal BST wird dann in das trainierte Maschinenlernmodul NN als Eingabesignal eingespeist. Wie unten näher erläutert, ist das Maschinenlernmodul NN spezifisch darauf trainiert, aus den durch die Transformationsfunktion F transformierten Betriebssignalen BST Ausgabesignale AS zum optimierten Steuern der Maschine M abzuleiten. Diese Ausgabesignale AS des trainierten Maschinenlernmoduls NN werden im vorliegenden Ausführungsbeispiel zur Maschine M übermittelt, um diese zu steuern.

Um die Schnittstellen zwischen dem Maschinenlernmodul NN und der Transformationsfunktion F sowie zwischen der Transformationsfunktion F und dem Schlüsselgenerator KGEN gegen unberechtigten Zugriff zu schützen, ist das Maschinenlernmodul NN zusammen mit der Transformationsfunktion F und dem Schlüsselgenerator KGEN in einem Softwarecontainer SC vorzugsweise schlüssel- und/oder signaturgeschützt gekapselt. Die Schnittstellen können hierbei zum Beispiel durch Verschlüsselung oder Obfuskation geschützt werden. Der Softwarecontainer ist vorzugsweise so ausgestaltet, dass das Maschinenlernmodul NN, die Transformationsfunktion F und/oder der Schlüsselgenerator KGEN bei einer Auftrennung des Softwarecontainers SC ihre Funktionen verlieren.

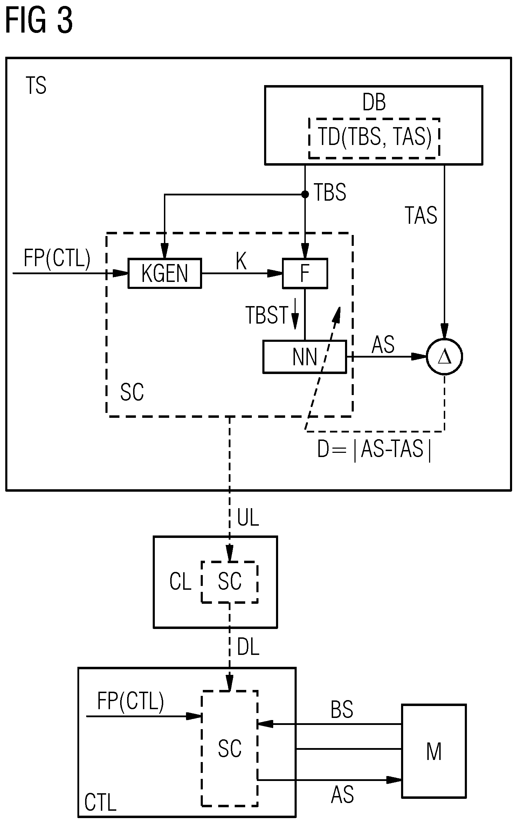

Figur 3 veranschaulicht ein erfindungsgemäßes Schutzsystem für ein Maschinenlernmodul NN.

Das Maschinenlernmodul NN, zum Beispiel ein künstliches neuronales Netz, wird in einem Trainingssystem TS darauf trainiert, ein Ausgabesignal AS auszugeben, mittels dessen die Maschine M in optimierter Weise gesteuert werden kann. Das Training wird anhand einer großen Menge von Trainingsdaten TD ausgeführt, die einer Datenbank DB entnommen werden. Im vorliegenden Ausführungsbeispiel enthalten die Trainingsdaten TD Paare aus jeweils einem Trainings-Betriebssignal TBS und einem zugeordneten Trainings-Ausgabesignal TAS, die vorzugsweise jeweils als numerische Datenvektoren dargestellt werden. Ein jeweiliges Trainings-Ausgabesignal TAS stellt dabei ein Steuersignal dar, durch das die Maschine M bei Vorliegen des zugeordneten Trainings-Betriebssignals TBS in optimierter Weise gesteuert wird. Die Trainingsdaten TD können beispielsweise aus einem Betrieb der Maschine M, einem Betrieb einer dazu ähnlichen Maschine oder aus einer Simulation der Maschine M ermittelt werden.

Unter einem Training sei hierbei allgemein eine Optimierung einer Abbildung eines Eingabesignals eines Maschinenlernmoduls auf dessen Ausgabesignal verstanden. Diese Abbildung wird nach vorgegebenen gelernten und/oder zu lernenden Kriterien während einer Trainingsphase optimiert. Als Kriterium können insbesondere bei Steuermodellen ein Erfolg einer Steueraktion oder bei Prädiktionsmodellen ein Prädiktionsfehler herangezogen werden. Durch das Training können beispielsweise Vernetzungsstrukturen von Neuronen eines neuronalen Netzes und/oder Gewichte von Verbindungen zwischen den Neuronen so eingestellt bzw. optimiert werden, dass die vorgegebenen Kriterien möglichst gut erfüllt werden. Das Training kann somit als Optimierungsproblem aufgefasst werden.

Für derartige Optimierungsprobleme auf dem Gebiet des maschinellen Lernens sind eine Vielzahl von effizienten Optimierungsverfahren verfügbar, insbesondere gradientenbasierte Optimierungsverfahren, gradientenfreie Optimierungsverfahren, Rückpropagationsverfahren, Partikelschwarmoptimierungen, genetische Optimierungsverfahren und/oder populationsbasierte Optimierungsverfahren. Trainieren lassen sich insbesondere künstliche neuronale Netze, rekurrente neuronale Netze, faltende neuronale Netze, Perzeptrone, bayessche neuronale Netze, Autoencoder, variationale Autoencoder, Gauß-Prozesse, Deep-Learning-Architekturen, Support-Vektor-Maschinen, datengetriebene Regressionsmodelle, ... k-nächste-Nachbarn-Klassifikatoren, physikalische Modelle und/oder Entscheidungsbäume.

Im vorliegenden Fall wird zum Training des Maschinenlernmoduls NN, diesem - wie oben bereits angedeutet - die Transformationsfunktion F vorgeschaltet. Der Transformationsfunktion F wird eine durch den Schlüsselgenerator KGEN generierte Schlüsselangabe K als zusätzliches Argument zugeführt. Zur Generierung der Schlüsselangabe K werden dem Schlüsselgenerator KGEN ein digitaler Fingerabdruck FP(CTL) der zu Ausführung des trainierten Maschinenlernmoduls NN bestimmten Maschinensteuerung, hier CTL, zugeführt. Weiterhin werden dem Schlüsselgenerator KGEN, wie oben beschrieben, Trainings-Betriebssignale zugeführt, die einem aktuell durch die Transformationsfunktion F zu transformierenden Trainings-Betriebssignal zeitlich vorangehen. Aus dem digitalen Fingerabdruck FP(CTL) wird durch den Schlüsselgenerator KGEN abhängig von den früheren Trainings-Betriebssignalen TBS die Schlüsselangabe K generiert.

Zum Training des Maschinenlernmoduls NN werden die Trainings-Betriebssignale TBS der Transformationsfunktion F zusammen mit der Schlüsselangabe K als Argumente zugeführt und durch die Transformationsfunktion F zu transformierten Trainingsbetriebssignalen TBST transformiert. Die transformierten Trainingsbetriebssignale TBST werden dem zu trainierenden Maschinenlernmodul NN als Eingabesignale zugeführt.

Im Zuge des Trainings werden neuronale Gewichte des Maschinenlernmoduls NN vorzugsweise durch eines der oben erwähnten Optimierungsverfahren derart eingestellt, dass die Maschine M mittels der vom Maschinenlernmodul NN aus den transformierten Eingabesignalen TBST abgeleiteten Ausgabesignalen AS in optimierter Weise gesteuert wird. Zu diesem Zweck werden im vorliegenden Ausführungsbeispiel die Ausgabesignale AS mit den zugehörigen Trainings-Ausgabesignalen TAS verglichen und ein jeweiliger Abstand D zwischen diesen Signalen ermittelt. Als Abstand D kann beispielsweise ein euklidischer Abstand zwischen den darstellenden Datenvektoren ermittelt werden, gemäß D = |AS - TAS|. Die so ermittelten Abstände D werden, wie in Figur 3 durch einen punktierten Pfeil angedeutet, zum Maschinenlernmodul NN zurückgeführt. Dessen neuronale Gewichte werden dann so eingestellt, dass der Abstand D minimiert wird.

Alternativ oder zusätzlich kann zum Training des Maschinenlernmoduls NN auch ein Verfahren des bestärkenden Lernens verwendet werden. Hierbei kann die Maschine M oder eine Simulation der Maschine M durch die Ausgabesignale AS gesteuert werden, wobei fortlaufend eine Performanz der Maschine M gemessen oder anderweitig ermittelt wird. Als Performanz können zum Beispiel eine Leistung, ein Wirkungsgrad, ein Durchsatz, eine Ausführungsgeschwindigkeit oder andere für den Betrieb der Maschine M relevante Parameter ermittelt werden. Die neuronalen Gewichte des Maschinenlernmoduls NN werden dann so eingestellt, dass die Performanz optimiert wird.

Optional kann der Schlüsselgenerator KGEN selbst mittels eines Verfahrens des maschinellen Lernens darauf trainiert werden, eine Schlüsselangabe K zu generieren, durch die ein Trainingserfolg des Maschinenlernmoduls NN optimiert wird. Der Trainingserfolg kann hierbei insbesondere anhand des Abstands D oder anhand der Performanz der Maschine M quantifiziert werden.

Darüber hinaus kann das Maschinenlernmodul NN zusätzlich darauf trainiert werden, bei Einspeisung eines in den Betriebsdaten der Maschine M nicht vorkommenden Test-Eingabesignals ein vorgegebenes digitales Wasserzeichen als Ausgabesignal AS zu reproduzieren. Dieses Wasserzeichen kann bei einer späteren Verwendung oder Untersuchung des trainierten Maschinenlernmoduls NN dazu verwendet werden eine Herkunft des Maschinenlernmoduls NN festzustellen.

Das trainierte Maschinenlernmodul NN wird im Trainingssystem TS zusammen mit der Transformationsfunktion F sowie mit dem Schlüsselgenerator KGEN in einem Softwarecontainer SC wie oben beschrieben gekapselt. Durch die Verbindung des Maschinenlernmoduls NN mit der Transformationsfunktion F und dem Schlüsselgenerator KGEN sowie durch das in spezifischer Weise vom digitalen Fingerabdruck FP abhängigen Training ist das trainierte Maschinenlernmodul NN gegen eine unberechtigte Verwendung bzw. gegen eine Verwendung außerhalb der Maschinensteuerung CTL geschützt.

Der Softwarecontainer SC mit dem geschützten Maschinenlernmodul NN wird vom Trainingssystem TS durch einen Upload UL in eine Cloud CL, insbesondere in einen App-Store der Cloud CL übertragen.

Aus der Cloud CL oder ihrem App-Store wird der Softwarecontainer SC durch einen Download DL von einem Benutzer heruntergeladen, der mit Hilfe des geschützten Maschinenlernmoduls NN die Maschine M steuern möchte.

Zu diesem Zweck wird der Softwarecontainer SC durch die Maschinensteuerung CTL in einer Edge-Computing-Umgebung installiert und in einer Laufzeitumgebung der Edge-Computing-Umgebung ausgeführt. Dabei wird dem im Softwarecontainer SC enthaltenen Schlüsselgenerator KGEN ein digitaler Fingerabdruck FP(CTL) der Maschinensteuerung CTL zugeführt. Weiterhin werden dem Schlüsselgenerator KGEN, wie oben beschrieben, frühere Betriebssignale der zu steuernden Maschine M zugeführt, um die Ableitung der Schlüsselangabe K aus dem digitalen Fingerabdruck FP(CTL) zu beeinflussen.

Zur Steuerung der Maschine M werden aktuelle Betriebssignale BS der Maschine M in die im Softwarecontainer SC enthaltene Transformationsfunktion F eingespeist, der auch die generierte Schlüsselangabe K als zusätzliches Argument übergeben wird. Die durch die Transformationsfunktion F transformierten Betriebssignale BST werden dann dem im Softwarecontainer SC enthaltenen, trainierten Maschinenlernmodul NN als Eingabesignale zugeführt. Die daraus resultierenden Ausgabesignale AS des trainierten Maschinenlernmoduls NN werden dann, wie ebenfalls oben beschrieben, von der Maschinensteuerung CTL als Steuersignale zur Maschine M übermittelt.

Insofern das Maschinenlernmodul NN in spezifischer Weise auf die Ableitung von Steuersignalen AS aus den transformierten Betriebssignalen BST trainiert ist, ist davon auszugehen, dass das Maschinenlernmodul NN aus untransformierten Betriebssignalen BS keine sinnvollen Steuersignale ableiten kann. Da die Signaltransformation in individueller Weise mit dem Maschinenlernmodul CTL verschränkt ist, kann in der Regel sichergestellt werden, dass das Maschinenlernmodul NN nur von berechtigten Anwendern oder in dazu vorgesehen Maschinensteuerungen verwendet wird. Aufgrund der trainingsspezifischen und verwendungsspezifischen Verschränkung des Maschinenlernmoduls NN mit der Transformationsfunktion F sind die ablaufenden Wirkungsmechanismen nicht oder nur mit hohem Aufwand durch Unberechtigte rekonstruierbar oder rückgängig zu machen.

## Patentansprüche

1. Computerimplementiertes Verfahren zum Verwendungsschutz eines Maschinenlernmoduls (NN), mittels dessen aus Betriebssignalen (BS) einer Maschine (M) Steuersignale zum Steuern der Maschine (M) abzuleiten sind, wobei
a) eine Transformationsfunktion (F) zum Ausführen einer von einem Transformationsparameter (K) abhängigen Signaltransformation bereitgestellt wird,
b) eine für eine Verwendung des Maschinenlernmoduls (NN) durch eine Maschinensteuerung (CTL) spezifische Schlüsselangabe (K) eingelesen wird,
c) Eingabesignale (TBS) zum Training des Maschinenlernmoduls (NN) durch die Transformationsfunktion (F) zu transformierten Eingabesignalen (TBST) transformiert werden, wobei die Schlüsselangabe (K) als Transformationsparameter verwendet wird,
d) das Maschinenlernmodul (NN) anhand der transformierten Eingabesignale (TBST) trainiert wird,
e) das trainierte Maschinenlernmodul (NN) zur Maschinensteuerung (CTL) übermittelt wird,
f) durch die Maschinensteuerung (CTL) Betriebssignale (BS) der Maschine (M) durch die Transformationsfunktion (F) zu transformierten Betriebssignalen (BST) transformiert werden, wobei die Schlüsselangabe (K) als Transformationsparameter verwendet wird,
g) die transformierten Betriebssignale (BST) dem trainierten Maschinenlernmodul (NN) zugeführt werden, und
h) die Maschine (M) anhand von aus den transformierten Betriebssignalen (BST) abgeleiteten Steuersignalen gesteuert wird.

2. Verfahren nach Anspruch 1, **dadurch gekennzeichnet,**
**dass** die Transformationsfunktion (F) eine homomorphe und/oder holomorphe Signaltransformation ausführt.

3. Verfahren nach einem der vorhergehenden Ansprüche, **dadurch gekennzeichnet,**
**dass** die Schlüsselangabe (K) eine für die Maschinensteuerung (CTL), für eine Steuerplattform der Maschinensteuerung (CTL) und/oder für einen Anwender der Maschinensteuerung (CTL) spezifische Angabe ist.

4. Verfahren nach einem der vorhergehenden Ansprüche, **dadurch gekennzeichnet,**
**dass** die Schlüsselangabe (K)
- einen digitalen Fingerabdruck (FP),
- eine MAC-Adresse,
- ein Benutzerkennwort,
- eine Hardwarekennung,
- eine Seriennummer,
- ein Maschinenzertifikat,
- eine Parametrisierung und/oder
- eine Systemeigenschaft
der Maschinensteuerung (CTL) umfasst oder mittels eines Schlüsselgenerators (KGEN) daraus abgeleitet wird.

5. Verfahren nach Anspruch 4, **dadurch gekennzeichnet,**
**dass** dem Schlüsselgenerator (KGEN) ein Betriebssignal der Maschine (M) zugeführt wird, und
**dass** die Schlüsselangabe (K) durch den Schlüsselgenerator (KGEN) abhängig vom zugeführten Betriebssignal generiert wird.

6. Verfahren nach Anspruch 4 oder 5, **dadurch gekennzeichnet,**
**dass** ein Trainingserfolg des Maschinenlernmoduls (NN) ermittelt wird, und
**dass** der Schlüsselgenerator (KGEN) mittels eines Verfahrens des maschinellen Lernens darauf trainiert wird, eine Schlüsselangabe zu generieren, durch die der Trainingserfolg des Maschinenlernmoduls (NN) optimiert wird.

7. Verfahren nach einem der vorhergehenden Ansprüche, **dadurch gekennzeichnet,**
**dass** ein Test-Eingabesignal sowie ein vorgegebenes digitales Wasserzeichen eingelesen werden,
**dass** das Test-Eingabesignal durch die Transformationsfunktion (F) zu einem transformierten Test-Eingabesignal transformiert wird,
**dass** das Maschinenlernmodul (NN) darauf trainiert wird, anhand des transformierten Test-Eingabesignals das digitale Wasserzeichen zu reproduzieren,
**dass** durch die Maschinensteuerung (CTL) das transformierte Test-Eingabesignal dem Maschinenlernmodul (NN) zugeführt wird, dass geprüft wird, ob ein resultierendes Ausgabesignal (AS) des Maschinenlernmoduls (NN) das digitale Wasserzeichen enthält, und
**dass** die Maschine (M) abhängig vom Prüfungsergebnis gesteuert wird.

8. Verfahren nach einem der vorhergehenden Ansprüche, **dadurch gekennzeichnet,**
**dass** das Maschinenlernmodul (NN) und die Transformationsfunktion (F) in einem Softwarecontainer (SC) gekapselt werden.

9. Verfahren nach einem der vorhergehenden Ansprüche, **dadurch gekennzeichnet,**
**dass** ein Betriebsverhalten der Maschine (M) überwacht wird, und
**dass** bei Detektion einer Veränderung des Betriebsverhaltens ein Alarmsignal übermittelt wird.

10. Schutzsystem zum Verwendungsschutz eines Maschinenlernmoduls (NN), eingerichtet zum Ausführen eines Verfahrens nach einem der vorhergehenden Ansprüche.

11. Computerprogrammprodukt eingerichtet zum Ausführen eines Verfahrens nach einem der Ansprüche 1 bis 9.

12. Computerlesbares Speichermedium mit einem Computerprogrammprodukt nach Anspruch 11.
